(19) **Europäisches Patentamt**

**European Patent Office**

**Office européen des brevets**

(11) **EP 0 816 679 A1**

(12) **EUROPÄISCHE PATENTANMELDUNG**

| | |
|---|---|
| (43) Veröffentlichungstag:<br>**07.01.1998 Patentblatt 1998/02** | (51) Int. Cl.[6]: **F04B 51/00** |

(21) Anmeldenummer: **97109936.1**

(22) Anmeldetag: **17.06.1997**

| | |
|---|---|
| (84) Benannte Vertragsstaaten:<br>**DE FR GB IT**<br><br>(30) Priorität: **28.06.1996 DE 19625947**<br><br>(71) Anmelder:<br>**URACA PUMPENFABRIK GMBH & CO. KG**<br>**D-72574 Bad Urach (DE)** | (72) Erfinder:<br>• **Notzon, Stefan**<br>  **72574 Hengen (DE)**<br>• **Hövemeyer, Dirk**<br>  **72581 Dettingen/Erms (DE)**<br><br>(74) Vertreter:<br>**Patentanwalts-Partnerschaft**<br>**Rotermund + Pfusch**<br>**Waiblinger Strasse 11**<br>**70372 Stuttgart (DE)** |

(54) **Verfahren zur Störungsfrüherkennung an Pumpen sowie entsprechende Vorrichtung**

(57) Die Erfindung nutzt die neue Erkenntnis, daß bei Störungen, insbesondere Undichtigkeiten an einer Pumpe mit mehreren Verdrängern, an der Druckseite charakteristische Änderungen der Pulsationen des Förderstroms bzw. des Drucks auftreten. Durch entsprechende Meßorgane werden diese Änderungen erfaßt und für eine Störungsanzeige ausgewertet.

Fig.1

EP 0 816 679 A1

## Beschreibung

Die Erfindung betrifft ein Verfahren zur Störungsfrüherkennung für eine nach dem Verdrängerprinzip arbeitende Pumpe mit mehreren zwischen einer Saug- und Druckseite der Pumpe angeordneten, zueinander phasenverschoben arbeitenden Verdrängern, mit einem Pulsationen des Pumpmediums erfassenden Meßfühler und mit einer Einrichtung zur elektronischen Datenverarbeitung, in der ein für einen störungsfreien Betrieb der Pumpe charakteristisches Frequenzspektrum der Pulsationen gespeichert und mit aktuellen Meßdaten verglichen wird, um bei für Betriebsstörungen charakteristischen Abweichungen vorzeitig ein Warnsignal zu erzeugen.

Außerdem betrifft die Erfindung eine entsprechende Vorrichtung.

Ein derartiges Verfahren sowie eine zur Durchführung des Verfahrens geeignete Vorrichtung sind aus der DE 40 29 616 A1 bekannt. Dabei werden mit dem Meßfühler nicht nur absolute Druckwerte` sondern die Druckdifferenzen der Pulsationen ausgewertet. Dementsprechend ist die Erkennung von Störungen an grundsätzlich beliebigen Pumpentypen möglich, bei denen beim Betrieb auslaßseitige Druckschwankungen auftreten.

In der DE-Zeitschrift „Ölhydraulik und Pneumatik" 36 (1992), Nr. 3, Seiten 176 bis 181, wird der allgemeine Hinweis gegeben, Pulsationsspektren an Pumpen zum Zweck einer Störungserkennung auszuwerten.

Aus der DE 32 44 738 C2 ist es bekannt, zur Störungsfrüherkennung bei Pumpen die Tatsache auszunutzen, daß sich der zeitliche Verlauf der Druckpulsationen an bzw. in einem Verdrängerarbeitsraum bei Störungen, insbesondere bei Undichtigkeiten von Ventilen charakteristisch ändert. Durch Erfassung des Verlaufes der Druckpulsationen an einem Verdrängerarbeitsraum kann damit erkannt werden, ob die jeweilige Verdrängereinheit der Pumpe korrekt arbeitet oder nicht. Allerdings ist der meßtechnische Aufwand vergleichsweise groß, weil einerseits der zeitliche Verlauf der Druckpulsationen erfaßt werden muß und andererseits eine derartige Erfassung für jeden Verdrängerarbeitsraum gesondert durchzuführen ist.

Die DE 44 12 570 C2 bezieht sich auf einen Kompressor mit Detektoreinrichtungen zur Erfassung von Drehbewegungen.

Aufgabe der Erfindung ist es, bei einem Verfahren der eingangs angegebenen Art den meßtechnischen Aufwand wesentlich zu verringern.

Diese Aufgabe wird erfindungsgemäß mit den kennzeichnenden Merkmalen des Anspruches 1 gelöst.

Die Erfindung beruht auf dem allgemeinen Gedanken, bei einer Pumpe mit mehreren zueinander phasenverschoben arbeitenden Verdrängern zu überwachen, ob druckseitig charakteristische Änderungen der Pulsationen des Drucks oder Förderstroms des Pumpmediums auftreten.

Wenn eine Pumpe eine Anzahl Z von zueinander phasenverschoben mit einer Hubfrequenz $f_H$ arbeitenden Verdrängern aufweist, so sind druckseitig der Pumpe Pulsationen des Förderstroms des Pumpmediums mit der Grundfrequenz $F_0 = Zf_H$ zu erwarten, weil sich die Förderströme der einzelnen Verdränger überlagern, mit der Folge daß sich ein Gesamtförderstrom ergibt, der die Pulsationen sämtlicher Einzelförderströme enthält. Im übrigen enthält der Gesamtförderstrom auch Pulsationen mit Frequenzen höherer Ordnung, d.h. solchen, die Oberwellen einer zu erwartenden Grundfrequenz darstellen.

Normalerweise treten bei Pumpen mit mehreren gleichartigen Verdrängern, die jeweils mit gleicher Phasenverschiebung relativ zueinander arbeiten, keine nennenswerten Pulsationen mit einer Frequenz auf, die der Hubfrequenz $f_H$ eines einzelnen Verdrängers entspricht. Vielmehr werden solche Pulsationen (und deren Oberwellen) erst dann auftreten, wenn Störungen, beispielsweise Undichtigkeiten, an einer Verdrängereinheit auftreten.

Die Pulsationen des Förderstroms des Pumpmediums auf der Druckseite der Pumpe sind mit analogen Druckpulsationen verbunden, da die Pumpe regelmäßig gegen einen - gegebenenfalls sehr hohen - Druck auf ihrer Druckseite arbeiten muß.

Im Ergebnis treten damit bei Störungen einer Verdrängereinheit Druckpulsationen mit einerseits charakteristischen Frequenzen und mit andererseits charakteristischen Pulsationsmaxima auf.

Die Erfindung nutzt nun diese neue Erkenntnis, indem Meßanordnungen vorgesehen werden, die auf für Störungen charakteristische Erscheinungen im druckseitigen Förderstrom der Pumpe reagieren.

Gemäß einer bevorzugten Ausführungsform werden zum Erzeugen eines Warnsignals diejenigen Pulsationen ausgewertet, deren

Frequenz der Hubfrequenz eines Verdrängers oder dessen Frequenzen höherer Ordnung entspricht, die von den bei normalen Betrieb (ohne Störung) zu erwartenden Pulsationsfrequenzen abweichen.

Eine derartige Signalauswertung ist ohne weiteres möglich, weil Pumpen typischerweise nur in einem relativ engen Bereich der Hubfrequenz eines Verdrängers betrieben werden. Im Falle einer Pumpe mit Kurbeltriebwerk ist dies gleichbedeutend damit, daß die Pumpe normal nur in einem engen Drehzahlbereich arbeiten muß.

Soweit bei der Pumparbeit stark wechselnde Hubfrequenzen bzw. Drehzahlen auftreten, kann der entsprechende Wert ohne weiteres - beispielsweise durch Drehgeber - am Pumpentriebwerk bzw. -antrieb abgegriffen werden, um die Möglichkeit zu bieten, den jeweils für Störungen besonders signifikanten Frequenzbereich der Druckpulsationen zu überwachen.

Im übrigen wird hinsichtlich bevorzugter Merkmale der Erfindung auf die Ansprüche sowie die nachfolgende Erläuterung der Zeichnung verwiesen, anhand der besonders vorteilhafte Ausführungsformen der Erfindung beschrieben werden.

Dabei zeigt

Fig. 1 einen schematisierten Schnitt einer Plungerpumpe mit Kurbeltriebwerk und mehreren Plungern,

Fig. 2 ein Diagramm der Pulsationen des Förderstroms einer Dreizylinderpumpe,

Fig. 3 ein charakteristisches Pulsationsspektrum einer solchen Pumpe bei störungsfreiem Betrieb und

Fig. 4 ein entsprechendes Spektrum bei einer Undichtigkeit eines Druckventiles und

Fig. 5 ein Blockschaltbild einer besonders einfachen Signalauswertung.

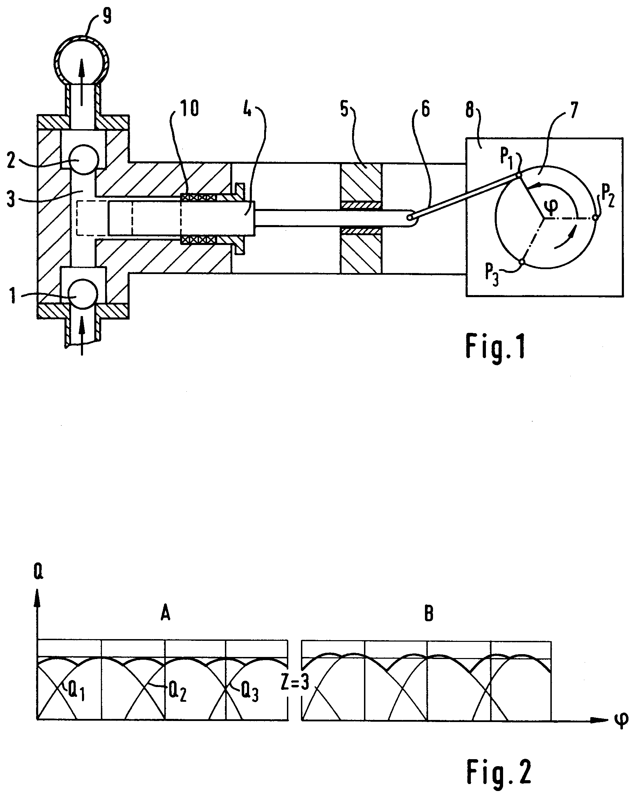

Gemäß Fig. 1 besitzt die Pumpe mehrere eingangsseitig jeweils durch ein Saugventil 1 und druckseitig durch ein Druckventil 2 abgeschlossene Arbeitsräume 3, in denen jeweils ein Plunger 4 arbeitet, d.h. der Plunger 4 führt in Fig. 1 nach links gerichtete Druck- und nach rechts gerichtete Saughübe aus.

Antriebsmäßig sind die Plunger 4 über Kreuzköpfe, die in Kreuzkopfführungen 5 gehalten sind, und Pleuelstangen 6 mit einer nur schematisch dargestellten Kurbelwelle 7 eines durch nicht dargestellten Motor angetriebenen Kurbeltriebwerkes 8 verbunden. Die den Plungern 4 zugeordneten Kurbelwellenkröpfungen sind in Achsansicht der Kurbelwelle 7 um zueinander gleiche Winkel versetzt angeordnet. Im Beispiel der Fig. 1 bis 4 wird von drei Plungern 4 ausgegangen, deren Pleuel-stangen dann bei $P_1$, $P_2$ bzw. $P_3$ an zugeordneten Kröp-fungen der Kurbelwelle 7 angelenkt sind. Diese Anlenkpunkte sind jeweils relativ zueinander im Winkel von 120° versetzt.

Alle Plunger 4 der Pumpe fördern druckseitig in eine Drucksammelleitung 9. Jeder Arbeitsraum 3 ist am zugeordneten Plunger 4 mittels einer Plungerdichtung 10 abgedichtet.

Fig. 2 zeigt nun den Förderstrom Q in der Drucksammelleitung 9 über dem Kurbelwinkel $\varphi$ bei einer Drei-Plunger-Pumpe, welche störungsfrei laufen möge. Wenn die Plunger in üblicher Weise gleiche Querschnitte und gleiche Hübe aufweisen, erzeugt jeder Plunger annähernd den gleichen Förderstrom. Die Kur-ven $Q_1$ bis $Q_3$ zeigen die Förderströme, die von den einzelnen Plungern erzeugt werden. Aufgrund der Überlagerung der Förderströme der einzelnen Plunger ergibt sich ein bezüglich der Pulsationen stark geglätteter Gesamtförderstrom mit betragsmäßig relativ geringen Pulsationen und einer Pulsationsfrequenz, die deutlich oberhalb der Hubfrequenz jedes einzelnen Plungers 4 liegt.

In Bild A der Fig. 2 sind die Verhältnisse gezeigt, wie sie sich ergeben, wenn die von jedem einzelnen Plunger 4 erzeugten Pulsationen vollständig symmetrisch sind. Das Bild B zeigt die Verhältnisse bei leicht unsymmetrischen Pulsationen der von den Plungern 4 erzeugten Förderströme.

Die folgenden Ausführungen gelten sowohl für Pulsationen des Förderstroms wie auch für die analogen Druckpulsationen.

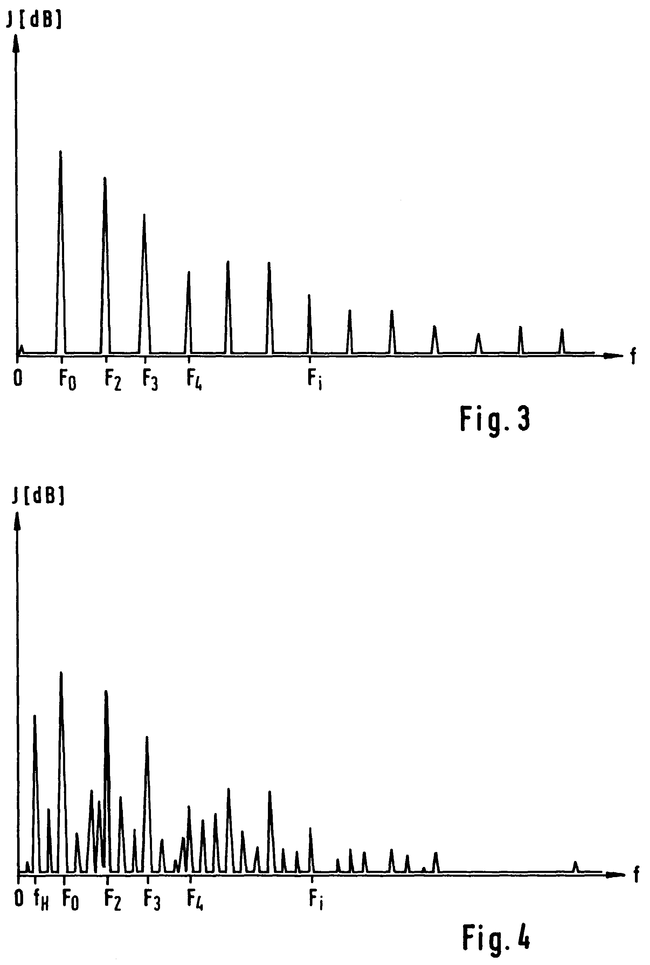

Die Fig. 3 zeigt nun den Pegel J der Druckpulsationen bei einer störungsfrei arbeitenden Drei-Plunger-Pumpe in Abhängigkeit von der Frequenz f. Man erkennt, daß nennenswerte Pegel nur in schmalen Frequenzbereichen auftreten. Ein relativ hoher Pegel tritt in der Nachbarschaft einer Grundfrequenz $F_0$ auf, welche rechnerisch das Produkt aus der Anzahl Z der Plunger und der Hubfrequenz $f_H$ jedes Plungers ergibt, d.h.

$$F_0 = Zf_H.$$

Darüber hinaus treten hohe Intensitäten - mit zu hohen Frequenzen hin geringer werdenden Pegeln - jeweils bei ganzzahligen Vielfachen der Grundfrequenz $F_0$ auf, d.h. bei den Frequenzen $F_2 = 2F_0$ sowie $F_3 = 3F_0$ usw.

Bemerkenswert ist, daß unterhalb der Grundfre-quenz $F_0$ sowie zwischen den Frequenzpaaren $F_0/F_2$, $F_2/F_3$, $F_3/F_4$ usw. keine nennenswerten Pegel nachweisbar sind, solange die Pumpe störungsfrei arbeitet.

Deutlich andere Verhältnisse liegen vor, wenn an einem Plungerarbeitsraum eine Undichtigkeit, beispielsweise an einem Ventil, insbesondere dem Druckventil, auftritt. Einerseits treten wie im Falle eines störungsfreien Betriebs der Pumpe sehr hohe Pegel nahe den Frequenzen $F_0$, $F_2$, $F_3$ usw. auf. Darüber hin-aus tritt auch ein sehr hoher Pegel im Bereich der Frequenz $f_H$ auf, d.h. der Hubfrequenz eines Plungers 4, deren Wert bei einer Drei-Plunger-Pumpe bei einem Drittel der Grundfrequenz $F_0$ liegt. Im übrigen lassen sich höhere Pegel bei ganzzahligen Vielfachen der Frequenz $f_H$ nachweisen.

Wenn nun gemäß der Erfindung überwacht wird, ob unterhalb der Grundfrequenz $F_0$ und insbesondere bei der Frequenz $f_H$ und/oder zwischen den Frequenzpaa-ren $F_0/F_2$, $F_2/F_3$, $F_3/F_4$ usw. ausgeprägte Druckpulsa-tionen auftreten, läßt sich zu einem sehr frühen Zeitpunkt eine Störung an der Pumpe, insbesondere ein Ventilschaden oder eine Schaden an Plungerdichtungen, erkennen. Damit ist einerseits eine frühzeitige Reparatur bzw. ein frühzeitiger Austausch von Verschleißteilen möglich, bevor höhere Folgeschäden auftreten können. Andererseits wird auch die Möglichkeit geboten, die Zahl der Inspektionen dem jeweiligen Bedarf anzupassen.

Der meßtechnische Aufwand kann bei der Erfindung äußerst gering gehalten werden.

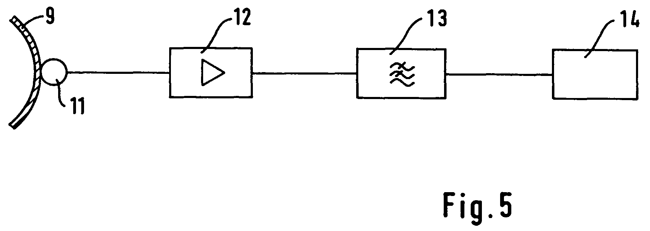

Gemäß Fig. 5 ist an der Drucksammelleitung 9 (vgl. auch Fig. 1) ein prinzipiell beliebiger Drucksensor 11 angeordnet, welcher beispielsweise mit Dehnungsmeßstreifen oder piezoelektrischen Elementen arbeiten kann. An die Meßgenauigkeit bezüglich des in der Drucksammelleitung 9 auftretenden hydraulischen Druckes werden nur geringe Anforderungen gestellt.

Die Ausgangssignale des Drucksensors 11 geben in digitaler oder analoger Form den Druck in der Drucksammelleitung 9 wieder. Bei störungsfrei arbeitender Pumpe zeigen die Ausgangssignale die in Fig. 2 dargestellten Pulsationen des Gesamtförderstroms.

Die Signale des Drucksensors 11 werden gegebenenfalls in einem Meßverstärker 12 verstärkt und dann einem Bandpaßfilter 13 zugeführt, welches nur solche Signalschwankungen durchläßt, deren Frequenz unterhalb eines Frequenzbereiches liegt, dessen obere Grundfrequenz zwischen $F_0$ und $f_H$ und dessen untere Grenzfrequenz zwischen 0 und $f_H$ liegt.

Der Ausgang des Filters 13 kann mit einem Monitor 14 verbunden sein, welcher den zeitlichen Verlauf der Ausgangssignale des Filters 13 darstellt. Bei störungsfrei arbeitender Pumpe ergibt sich ein weitgehend konstant bleibendes, allenfalls schwach schwankendes Signal. Beim Auftreten einer Störung ergibt sich ein ausgeprägt periodisch schwankendes Signal, d.h. eine größere Signalamplitude ist ein eindeutiger Hinweis auf eine Störung.

Gegebenenfalls kann alternativ oder zusätzlich zum Monitor 14 ein Signalgeber vorgesehen sein, welcher ein Signal erzeugt, sobald die vorgenannte Amplitude einen Schwellwert überschreitet.

Falls die Pumpe mit stark wechselnder Fördergeschwindigkeit bzw. Drehzahl arbeitet, kann ein zusätzlicher Meßfühler vorgesehen sein, der ein von der Fördergeschwindigkeit bzw. Drehzahl und damit auch mit der Plungerhubfrequenz $f_H$ abhängiges Signal erzeugt, damit die Signale des Drucksensors 11 im richtigen Frequenzbereich auf erhöhte Pegel untersucht werden können.

Der Drucksensor 11 ist vorzugsweise an einem Bereich der Drucksammelleitung 9 angeordnet, wo die auszuwertenden Druckpulsationen weitestgehend ungedämpft auftreten.

Die Größe der Druckpulsationen auf der Druckseite einer nach dem Verdrängerprinzip arbeitenden Pumpe hängt stark von der konstruktiven Ausbildung des jeweiligen Drucksystems und insbesondere davon ab, inwieweit dieses Drucksystem pulsationsdämpfende Eigenschaften aufweist oder Pulsationsdämpfer umfaßt. Im Extremfall können die Druckpulsationen äußerst gering sein.

In derartigen Fällen ist gemäß einer bevorzugten Ausführungsform der Erfindung vorgesehen, in der Druckleitung 9 (vgl. Fig. 1) zwischen Drucksystem und Pumpe, nahe der Pumpe eine Drossel anzuordnen, welche zweckmäßigerweise ein- und ausschaltbar ist. Eine solche Drossel bewirkt - im eingeschalteten Zustand - daß zumindest unmittelbar an der Pumpe ausgeprägte Druckpulsationen auftreten und dementsprechend auch deren Frequenzen sicher ausgewertet werden können.

Die genannte Drossel kann dann jeweils für eine Meßphase wirksam geschaltet werden, etwa beim Start der Pumpe.

Die durch Undichtigkeiten an einer Verdrängereinheit einer Pumpe hervorgerufenen charakteristischen Druckpulsationen weisen nicht nur charakteristische Frequenzen auf. Vielmehr wird durch die Undichtigkeiten auch der Betrag der Differenz zwischen dem Maximal- und Minimalwert des Drucks des Pumpmediums auf der Druckseite der Pumpe verändert, d.h. die genannte Differenz kann charakteristisch große Werte annehmen. Dies wird verständlich bei Betrachtung der Fig. 2. Bei Undichtigkeiten einer Verdrängereinheit hat einer der Teilförderströme $Q_1$ bis $Q_3$ ein vergleichsweise niedriges Maximum, mit der Folge, daß zwischen dem (absoluten) Maximalwert des Gesamtförderstromes und dem (absoluten) Minimalwert des Gesamtförderstromes eine besonders große Differenz auftritt. Dementsprechend tritt auch bei den korrespondierenden Druckpulsationen eine deutlich erhöhte Differenz zwischen dem Maximal- und dem Minimalwert des Druckes auf.

Es ist also grundsätzlich auch möglich und vorteilhaft, die druckseitig einer Verdrängerpumpe auftretenden Druckschwankungen zu erfassen und ein Fehlersignal zu erzeugen, sobald der Betrag dieser Druckschwankungen einen vorgegebenen Schwellwert überschreiten.

Schließlich ist es auch grundsätzlich möglich, anstelle der Druckpulsationen die Pulsationen des Förderstroms zu ermitteln, beispielsweise indem die Laufzeit von Ultraschallimpulsen ermittelt wird, die dazu in das Pumpmedium auf der Druckseite der Pumpe eingekoppelt werden.

Allerdings ist bislang der meßtechnische Aufwand deutlich größer als bei Auswertung der Druckpulsationen, so daß die Auswertung der Druckpulsationsfrequenzen derzeit besonders bevorzugt ist.

**Patentansprüche**

1. Verfahren zur Störungsfrüherkennung für eine nach dem Verdrängerprinzip arbeitende Pumpe mit mehreren zwischen einer Saug- und Druckseite der Pumpe angeordneten, zueinander phasenverschoben arbeitenden Verdrängern und mit einem Pulsationen des Pumpmedium erfassenden Meßfühler, mit einer Einrichtung zur elektronischen Datenverarbeitung, in der ein für einen störungsfreien Betrieb der Pumpe charakteristisches Frequenzspektrum der Pulsationen gespeichert und mit aktuellen Meßdaten verglichen wird, um bei für Betriebsstörungen charakteristischen Abweichungen vorzeitig ein Warnsignal zu erzeugen, **dadurch gekennzeichnet,** daß der Meßfühler (11) der Druckseite (9) der Pumpe zugeordnet ist und deren Pulsationen erfaßt, daß zum Erzeugen des Warnsignals Meßdaten aus solchen Frequenzbereichen ausgewertet werden, die im Frequenzspektrum des störungsfreien Betriebs zwischen den Pulsationsmaxima liegen.

2. Verfahren nach Anspruch 1,
**dadurch gekennzeichnet,**
daß zum Erzeugen des Warnsignals Meßdaten ausgewertet werden, die im Bereich der Frequenz der Verdränger liegen.

3. Vorrichtung nach einem der Ansprüche 1 bis 2,
**dadurch gekennzeichnet,**
daR am Pumpentriebwerk (8) bzw. am Pumpenantrieb ein Meßfühler zur Ermittlung des Istwertes der Hubfrequenz ($f_H$) eines Verdrängers (4) angeordnet ist.

4. Vorrichtung nach einem der Ansprüche 1 bis 3,
**dadurch gekennzeichnet,**
daß im druckseitigen Förderstrom der Pumpe bzw. in deren Druckleitung (9) eine ständige bzw. für Meßphasen einschaltbare Drossel zur Erhöhung von Druckpulsationen angeordnet ist.

Fig.1

Fig.2

$J [dB]$

$0 \quad F_0 \quad F_2 \quad F_3 \quad F_4 \qquad F_i \qquad f$

Fig. 3

$J [dB]$

$0 \ f_H \ F_0 \quad F_2 \quad F_3 \quad F_4 \qquad\qquad F_i \qquad f$

Fig. 4

9 12 13 14

11

Fig.5

EP 0 816 679 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | EP 0 487 507 A (TEVES GMBH ALFRED) 27.Mai 1992 | 1-3 | F04B51/00 |
| Y | * Spalte 1, Zeile 42 - Spalte 4, Zeile 37; Abbildungen * | 4 | |
| Y | US 3 817 097 A (HEROUX T) 18.Juni 1974 <br> * Ansprüche; Abbildungen * | 4 | |
| A | SILAN LIU ET AL: "PULSATING PARAMETER METHOD FOR FAULT DIAGNOSIS FOR A HYDRAULIC PUMP" , PROCEEDINGS OF THE INTERNATIONAL CONFERENCE ON INDUSTRIAL ELECTRONI CONTROL AND INSTRUMENTATION (IECON), KOBE, OCT. 28 - NOV. 1, 1991, VOL. 3 OF 3, PAGE(S) 2145 - 2150 , INSTITUTE OF ELECTRICAL AND ELECTRONICS ENGINEERS XP000325538 | 1 | |
| A | US 4 549 853 A (GASPER KENNETH E ET AL) 29.Oktober 1985 <br> * Spalte 1, Zeile 46 - Spalte 2, Zeile 20 * | 1 | |
| | | | RECHERCHIERTE SACHGEBIETE (Int.Cl.6) |
| A | US 5 168 753 A (ARNDT FRIEDRICH K ET AL) 8.Dezember 1992 <br> * Spalte 2, Zeile 37 - Zeile 63 * | 1 | F04B |

Der vorliegende Recherchenbericht wurde für alle Patentansprüche erstellt

| Recherchenort | Abschlußdatum der Recherche | Prüfer |
|---|---|---|
| DEN HAAG | 9.Oktober 1997 | Ernst, R |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

    ................................................................
& : Mitglied der gleichen Patentfamilie, übereinstimmendes
    Dokument

EPO FORM 1503 03.82 (P04C03)